# EUROPÄISCHE PATENTSCHRIFT

(11) **EP 3 723 962 B1**
(45) Veröffentlichungstag und Bekanntmachung des Hinweises auf die Patenterteilung: **13.07.2022**
(21) Anmeldenummer: 18815645.9
(22) Anmeldetag: 06.12.2018
(51) Int. Cl.: B29C 49/48, B29C 31/00, B65B 59/04, B65C 9/00, B67C 3/22

(54) **VORRICHTUNG UND VERFAHREN ZUM BEHANDELN VON BEHÄLTNISSEN MIT FAHRERLOSEN-TRANSPORTSYSTEM**
DEVICE AND METHOD FOR PROCESSING CONTAINERS BY MEANS OF A DRIVERLESS TRANSPORT SYSTEM
DISPOSITIF ET PROCÉDÉ DE MANIPULATION DE RÉCIPIENTS À L'AIDE D'UN SYSTÈME DE TRANSPORT SANS CHAUFFEUR

(30) Priorität: 13.12.2017 DE 102017129847
(43) Veröffentlichungstag der Anmeldung: 21.10.2020
(73) Patentinhaber: Krones AG, 93073 Neutraubling (DE)
(72) Erfinder: HAHN, Wolfgang, 93073 Neutraubling (DE); MILDNER, Thomas, 93073 Neutraubling (DE); RAITH, Stefan, 93073 Neutraubling (DE); ZOELFL, Markus, 93073 Neutraubling (DE)
(74) Vertreter: Bittner, Bernhard
(86) Internationale Anmeldenummer: PCT/EP2018/083746
(87) Internationale Veröffentlichungsnummer: WO 2019/115331

(56) Entgegenhaltungen:
- JP-A- H07 100 833
- US-A1- 2011 078 979
- US-A1- 2013 224 323
- US-A1- 2015 251 366
- US-A1- 2017 182 679

## Beschreibung

Die vorliegende Erfindung bezieht sich auf eine Vorrichtung und ein Verfahren zum Behandeln von Behältnissen und insbesondere Kunststoffbehältnissen. Derartige Behälterbehandlungseinrichtungen zum Herstellen und/oder Bearbeiten von Kunststoffbehältnissen sind aus dem Stand der Technik seit langem bekannt. Dabei können mit einer Behälterbehandlungseinrichtung üblicherweise eine Vielzahl von unterschiedlichen Behältertypen behandelt werden. Hierzu weist die Behälterbehandlungseinrichtung eine Reihe von austauschbaren Formatteilen und/oder Werkzeugen auf, um den jeweiligen Behältertyp zu behandeln bzw. herzustellen, welche entsprechend ausgetauscht werden müssen, sobald ein anderer Behälter hergestellt werden soll.

Für das Rüsten von Behälterbehandlungsmaschinen bzw. für die Umstellung auf einen anderen Behältertyp müssen die für den neuen Behälter benötigten Formatteile und Werkzeuge an der Behälterbehandlungseinrichtung bereitgestellt werden. Dies erfolgt üblicherweise auf Paletten, Fahrgestellen, Formatteilwägen oder ähnlichen Einrichtungen, welche bis zum Einsatz in Zwischenlagern gelagert werden und mittels Staplern oder Hubwägen zum Rüstort verbracht werden. Dies geschieht üblicherweise manuell, durch den Anlagenbediener bzw. das Anlagenpersonal.

Für die Bereitstellung der neuen Formatteile und Werkzeuge ist demnach Personaleinsatz erforderlich. Zudem erfolgt die Bereitstellung meist während dem Rüstprozess bzw. in einem Rüstbetrieb der Maschine, d.h. beim Stillstand der Maschine, was dazu führt, dass der Rüstprozess unnötig verlängert wird, da der Bediener zuerst die neuen Formatteile aus dem Lager holen muss, anschließend die Umrüstung vornehmen muss und dann die ausgetauschten Formatteile wieder ins Lager zurück bringen muss. Um diese Stillstandzeit möglichst gering zu halten erfolgt die Bereitstellung häufig während der Produktion durch den Bediener, was dazu führt, dass dieser den Bedienort bzw. die laufende Maschine verlassen muss. Falls in diesem Zeitraum eine Störung oder dergleichen an der Maschine auftritt kann nicht rechtzeitig auf diese reagiert werden, wodurch ein erhöhter Produktionsausfall entsteht. Würde die Bereitstellung der neuen Formatteile und Werkzeuge durch anderes Personal erfolgen, wäre ein zusätzlicher Personal- und Organisationsaufwand erforderlich.

US2017182679A1 offenbart eine Vorrichtung und ein Verfahren nach den Oberbegriffen der unabhängigen Ansprüchen. US2015251366A1 offenbart Wechselroboter. Weitere Vorrichtungen und Verfahren werden in US2011078979A1, US2013224323A1 und JPH07100833A offenbart.

Der vorliegenden Erfindung liegt daher die Aufgabe zugrunde, eine Vorrichtung und ein Verfahren bereitzustellen, mit der/mit dem die Formatteile und/oder Werkzeuge besonders effektiv bereitgestellt werden können und mit welcher/mit welchem die Rüstzeiten für die Anlagen erheblich reduziert werden können. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Die vorliegende Erfindung ist dabei auf eine Vorrichtung und ein Verfahren nach den unabhängigen Ansprüchen gerichtet.

Die erfindungsgemäße Vorrichtung und auch das erfindungsgemäße Verfahren haben demnach insbesondere die Vorteile, dass durch das automatische Bereitstellen der Formatteile an der Behälterbehandlungseinrichtung durch das fahrerlose-Transportsystem die Rüstzeiten erheblich verkürzt werden können und zudem eine geringerer Bedienerbelastung vorliegt, wodurch eine höhere Verfügbarkeit und insgesamt geringere Gesamtbetriebskosten erreicht werden können. Je nach Art oder Anzahl der Formatteile und Werkzeuge können diese unter Umständen auch ohne separates Tragmittel an das fahrerlose-Transportsystem, im Folgenden auch mit FTS bezeichnet, übergeben werden, wodurch ebenfalls eine Kosteneinsparung erreicht werden kann. Daneben kann auch ein gegebenenfalls bereits vorhandenes FTS mit geringem Zusatz-Aufwand zusätzlich genutzt werden, wodurch Personalaufwand eingespart werden kann.

Die Bereitstellung der Formatteile erfolgt demnach bevorzugt während der Produktion so rechtzeitig direkt an die Behälterbehandlungseinrichtung, dass die Formatteile bei Beginn des Rüstprozesses bereits an der Maschine bereit stehen. Unter Umständen kann auch während des laufenden Betriebs bereits mit der Umrüstung begonnen werden, wodurch die Stillstandzeit der Anlage erheblich reduziert werden kann. So kann beispielsweise ein Testlauf zur Überprüfung der Formatteile bezüglich Zuordnung und Vollständigkeit erfolgen.

In einer bevorzugten Ausführungsform ist die Behälterbehandlungseinrichtung aus einer Gruppe von Behandlungseinrichtungen ausgewählt, welche eine Erwärmungseinrichtung zum Erwärmen der Behältnisse, eine Umformungseinrichtung zum Umformen der Behältnisse, eine Etikettiereinrichtung zum Etikettieren der Behältnisse, eine Fülleinrichtung zum Füllen der Behältnisse, einen Verschließer zum Verschließen von Behältnissen, eine Verpackungseinrichtung zum Verpacken der Behältnisse, eine Transporteinrichtung zum Transportieren der Behältnisse, eine Sterilisationseinrichtung zum Sterilisieren der Behältnisse oder dergleichen enthält.

Bei den Formatteilen und/oder Werkzeugen, welche bei Umstellung auf einen anderen Behältertyp ausgetauscht werden müssen, handelt es sich bevorzugt um Blasformen, Halteeinrichtungen, Transportdorne, Füllköpfe, Fülldüsen, Blasdüsen, Sterilisationsdüsen, Verpackungsmaterialien, Verschlüsse, Reckstangen, Führungsschienen, Haltedorne, Halteklammern und dergleichen.

Bei einer bevorzugten Ausführungsform sind die Formatteile und/oder Werkzeuge mittels des fahrerlosen-Transportsystems zu einer vorgegebenen Arbeitsposition der Behälterbehandlungseinrichtung bringbar, wobei es sich bei dieser Arbeitsposition um den Rüstzugang handelt. Bei dem Rüstzugang handelt es sich bevorzugt um eine Öffnung oder eine Schleuse in einer Wandung der Behälterbehandlungseinrichtung durch welche hindurch ein Austausch bzw. ein Wechsel der Formatteile vorgenommen werden kann. Besonders bevorzugt weist das fahrerlose-Transportsystem eine Ortserfassungseinrichtung auf, um die Arbeitsposition bzw. den Rüstzugang zu lokalisieren. Hierfür kann beispielsweise auch an der entsprechenden Position an der Behälterbehandlungseinrichtung eine Sendeeinrichtung angeordnet sein, welche mit der Ortserfassungseinrichtung des FTS kommuniziert. Darüber hinaus kann dem FTS der Verfahrweg bevorzugt auch über die Steuerungseinrichtung vorgegeben werden und/oder das FTS weit ein optisches Erkennungssystem auf, um die Arbeitsposition zu erkennen und entsprechend anzufahren.

Das Transportsystem weist weiterhin eine Antriebseinrichtung auf, bei welcher es sich bevorzugt um eine Batterie, einen Akku oder einen elektrischen oder pneumatischen Antrieb handelt.

Bei einer weiteren bevorzugten Ausführungsform sind die Formatteile und/oder Werkzeuge auf einem Tragegestell angeordnet, welches von dem fahrerlosen-Transportsystem aufnehmbar und/oder ablegbar ist. Die Formatteile und/oder Werkzeuge für das Rüsten werden demnach auf Tragegestellen angeordnet, die direkt von dem FTS aufgenommen werden können. Bei diesen Tragegestellen kann es sich beispielsweise um palettenartige Gestelle oder dergleichen handeln. Dementsprechend handelt es sich bei dem FTS bevorzugt um einen selbstfahrenden Hubwagen. Vorteilhaft ist das FTS zumindest hubwagenartig ausgebildet. Denkbar sind allerdings auch alle anderen möglichen Ausgestaltungen des Tragegestells, wie beispielsweise Gestelle mit Rollen.

Die Formatteile und Werkzeuge sind dabei bevorzugt griffbereit an dem Tragegestell, wie beispielsweise einen Lochblech oder ähnlichem, angeordnet, so dass keine Zeit für das Suchen der Teile benötigt wird. Diese Anordnung auf dem Tragegestell kann dabei manuell durch einen Bediener oder durch das fahrerlose-Transportsystem selbst erfolgen, wobei dieses hierzu wenigstens einen Roboterarm mit Greifeinrichtung zum Greifen der Formatteile aufweist. Wie in den Figuren näher beschrieben wird, können die Tragegestelle darüber hinaus vorteilhaft auch Hubeinrichtungen oder Tragrollen aufweisen, so dass das Tragegestell näher am Rüstort der Maschine positioniert werden kann. Bevorzugt wird durch die Hubeinrichtungen oder Tragrollen auch eine einfachere Aufnahme und Abgabe durch das FTS ermöglicht, wobei hierzu bevorzugt auch das FTS entsprechende Hubeinrichtungen oder Tragrollen aufweisen kann.

Bei einer besonders bevorzugten Ausführungsform weist die Vorrichtung eine Vielzahl von Behälterbehandlungseinrichtungen auf und mittels des fahrerlosen-Transportsystems sind die Formatteile und/oder Werkzeuge zu der Vielzahl von Behälterbehandlungseinrichtungen bringbar. Besonders bevorzugt ist das fahrerlose-Transportsystem demnach zwischen einer Vielzahl von Behälterbehandlungseinrichtungen frei verfahrbar oder auf einem Schienensystem verfahrbar. Das Schienensystem verläuft dabei bevorzugt zwischen den einzelnen Behälterbehandlungseinrichtungen, wobei der Weg dem Transportsystem über die Steuerungseinrichtung vorgegeben werden kann. Entsprechend kann auch der freie Verfahrweg dem FTS über die Steuerungseinrichtung vorgegeben werden. Bevorzugt kann der Verfahrweg auch manuell angepasst und verändert werden, so dass schnell auf sich ändernde Umstände reagiert werden kann. Das FTS weist dabei bevorzugt wenigstens einen und bevorzugt mehrere Sensoren auf, um Gegenstände oder Personen, die sich in der Fahrbahn befinden, zu erkennen.

Besonders bevorzugt ist demnach ein einziges fahrerloses-Transportsystem für eine Vielzahl von Behälterbehandlungseinrichtungen vorgesehen. Das fahrerlose-Transportsystem kann demnach bevorzugt derart gesteuert werden, so dass es beispielsweise zuerst neue Blasformen zu der Umformungseinrichtung bringt und anschließend die nächsten Formatteile, beispielsweise Halteeinrichtungen holt und zu der Transporteinrichtung bringt. Dabei kann das fahrerlose-Transportsystem bevorzugt derart gesteuert werden, dass zuerst die Formatteile an diejenige Behälterbehandlungseinrichtung gebracht werden, bei der der Wechselvorgang am längsten dauert. Darüber hinaus kann das fahrerlose-Transportsystem bevorzugt derart gesteuert werden, dass beispielsweise nach der Behandlung des letzten Behältnisses dieses Typs in der Umformungseinrichtung die neuen Blasformen hier bereits vorhanden sind und ausgetauscht werden können, die Etikettierung oder Befüllung, etc. der Behältnisse jedoch ungehindert weiterlaufen kann. Dementsprechend kann mit der Produktion des neuen Behältertyps auch schon begonnen werden, während beispielsweise in der Verpackungseinrichtung die neuen Verpackungen erst noch angeliefert werden müssen bzw. der alte Behältertyp hier noch verpackt wird. Das fahrerlose-Transportsystem kann demnach derart angesteuert werden, so dass die Produktion der Behältnisse trotz der Umstellung auf einen neuen Behältertyp in besonders effektiver Weise weitergeführt werden kann.

Erfindungsgemäss ist der wenigstens einen Behälterbehandlungseinrichtung ein Wechselroboter zum Auswechseln und/oder Austauschen der Formatteile zugeordnet, wobei das fahrerlose-Transportsystem und der Wechselroboter in Kommunikationsverbindung zueinander stehen und/oder das fahrerlose-Transportsystem und der Wechselroboter über eine Kontaktstelle miteinander kontaktierbar sind. Es ist daher möglich, dass das fahrerlose-Transportsystem mit dem Roboter verbunden wird bzw. an den Roboter andocken kann. Hierzu ist bevorzugt an dem Wechselroboter und dem fahrerlosen-Transportsystem jeweils wenigstens eine Kontaktstelle angeordnet, wobei es sich bei diesen Kontaktstellen bevorzugt um korrespondierende Verbindungsstellen handelt, welche eine form- und/oder kraftschlüssige Verbindung zwischen dem Roboter und dem fahrerlosen-Transportsystem ermöglichen.

Bevorzugt weist das Tragegestell, das fahrerlose-Transportsystem, der Wechselroboter und die Behälterbehandlungseinrichtung jeweils eine entsprechende Kontaktstelle auf, so dass das Tragegestell, das fahrerlose-Transportsystem, der Wechselroboter und die Behälterbehandlungseinrichtung jeweils miteinander kontaktierbar sind. Besonders bevorzugt sind die jeweiligen Kontaktstellen jedoch derart ausgebildet, so dass das Tragegestell und das fahrerlose-Transportsystem mit dem Wechselroboter und der Behälterbehandlungseinrichtung kontaktierbar sind.

Das fahrerlose-Transportsystem und der Wechselroboter und/oder das Tragegestell und der Wechselroboter und/oder das fahrerlose-Transportsystem und die Behälterbehandlungseinrichtung und/oder das Tragegestell und die Behälterbehandlungseinrichtung sind dabei bevorzugt derart miteinander verbindbar, dass der Roboter die Formateile und/oder Werkzeuge übernehmen kann und besonders bevorzugt den Wechsel der Formteile vornehmen kann. Die vorliegende Erfindung ermöglicht demnach nicht nur eine automatische Anlieferung der Formatteile zu der Behälterbehandlungseinrichtung, sondern zudem auch ein automatisches Wechseln der Formatteile. Hierzu weist der Wechselroboter bevorzugt wenigstens eine Greifeinrichtung auf, um die Formatteile und/oder Werkzeuge zu greifen. Bevorzugt weist der Roboter wenigstens zwei und besonders bevorzugt eine Vielzahl von Greifeinrichtungen auf. Der Roboter kann demnach beispielswiese mit einer Greifeinrichtung das auszuwechselnde Formatteil greifen und mit einer anderen oder dergleichen Greifeinrichtung anschließend gleich das neue Formatteil einsetzen, um einen besonders schnellen Austausch der Formatteile zu ermöglichen. Auch könnte bevorzugt das FTS selbst das Auswechseln der Formatteile vornehmen, wobei hierzu wenigstens ein Roboterarm an dem FTS angeordnet ist.

Denkbar wäre bevorzugt allerdings auch, dass das fahrerlose-Transportsystem das Tragegestell lediglich in dem Arbeitsbereich des Roboters abstellt und dieser die Formatteile dann greift oder das fahrerlose-Transportsystem die Formatteile an den Roboter übergibt oder auch, dass das Austauschen der Formatteile manuell über beispielsweise einen Manipulator erfolgt. Darüber hinaus könnten die Tragegestelle auch derart ausgeführt sein, dass beispielsweise Blasformen direkt für den Wechsel mit einem Wechselroboter in einer Roboterzelle bereitgestellt werden können. Vorteilhaft ist der Roboter derart angeordnet, so dass dieser beispielsweise den Blasformenwechsel an der Umformungseinrichtung vornehmen kann und zusätzlich beispielsweise auch die Haltedorne oder -klammern an der Erwärmungseinrichtung auswechseln kann. Demnach führt der Wechselroboter bevorzugt an wenigstens zwei Behälterbehandlungseinrichtungen den Austausch der Formatteile aus. Bevorzugt ist der Wechselroboter über die Ortserfassungseinrichtung des fahrerlosen-Transportsystems lokalisierbar. Besonders bevorzugt ist jedoch an jeder Behälterbehandlungsanlage ein eigener Wechselroboter vorhanden und das FTS versorgt alle Behälterbehandlungseinrichtungen mit den Formatteilen und/oder Werkzeugen.

Bei einer weiteren bevorzugten Ausführungsform weist das Tragegestell mindestens einen Sensor und/oder mindestens eine Fixierkante auf, um das Tragegestell gegenüber dem Wechselroboter zu positionieren. Besonders bevorzugt weist das Tragegestell wenigstens zwei Sensoren und/oder Fixierkanten auf. Dadurch kann bei ungenauer bzw. unzentrierter Bereitstellung die Position des Tragegestells zum Wechselroboter durch den Roboter selbst, beispielsweise durch Anfahren der Sensoren oder Fixkanten, ermittelt und berücksichtigt werden. Bevorzugt kann das Tragegestell hierdurch auch fixiert werden.

Daneben wäre es bevorzugt auch denkbar, dass an dem Tragegestell ein Barcode, RFID-Chip oder ähnliches angeordnet ist, welcher von dem fahrerlosen-Transportsystem erkennbar ist. Dadurch ist es möglich, dass das fahrerlose-Transportsystem das gerade benötigte Tragegestell im Lager erkennt und an die Behälterbehandlungseinrichtung bringt. Dieser Barcode bzw. RFID-Chip kann zudem auch dazu dienen, das Tragegestell und die Behälterbehandlungseinrichtung einander zuzuordnen oder zu identifizieren. Bevorzugt kann das fahrerlose-Transportsystem über die Ortserfassungseinrichtung auch den Ort des entsprechenden Tragegestells identifizieren.

Bei einer weiteren bevorzugten Ausführungsform ist die Steuerungseinrichtung des fahrerlosen-Transportsystems mit einer Steuerungseinrichtung der wenigstens einen Behälterbehandlungseinrichtung gekoppelt. Hierdurch kann die Behälterbehandlungseinrichtung bevorzugt selbstständig, d.h. ohne Eingriff eines Bedieners, ein Signal an das fahrerlose-Transportsystem abgeben, wenn neue Formatteile und/oder Werkzeuge benötigt werden. Dem fahrerlosen-Transportsystem wird demnach mitgeteilt, wann ein Wechsel vorgenommen werden muss bzw. in welchem Produktionsstadium sich die Behälterbehandlungseinrichtung gerade befindet und auch welcher Behältertyp als nächstes produziert werden soll, so dass das fahrerlose-Transportsystem rechtzeitig die benötigten Formatteile und/oder Werkzeuge bereitstellen kann.

Bevorzugt kann demnach über die Steuerungseinrichtung des fahrerlosen-Transportsystems der Zeitpunkt des Wechsels als auch der Verfahrweg des Transportsystems gesteuert werden. Vorteilhaft kann die Steuerungseinrichtung des fahrerlosen-Transportsystems durch einen Anlagenbediener angesteuert werden und/oder durch die Behälterbehandlungseinrichtung selbst.

Die vorliegende Erfindung ist weiterhin auch auf ein Verfahren zum Behandeln von Behältnissen und insbesondere Kunststoffbehältnissen gerichtet, mit wenigstens einer Behälterbehandlungseinrichtung, welche wenigstens einen Rüstzugang aufweist, an welchen in einem Rüstbetrieb Formatteile und/oder Werkzeuge ausgewechselt werden, wobei die für den Wechselvorgang benötigten Formatteile und/oder Werkzeuge mit einem Transportsystem zu der wenigstens einen Behälterbehandlungseinrichtung gebracht werden.

Erfindungsgemäß handelt es sich bei dem Transportsystem um ein fahrerloses-Transportsystem, welches die Formatteile und/oder Werkzeuge automatisch zu wenigstens einer Behälterbehandlungseinrichtung bringt.

Es wird daher auch verfahrensseitig vorgeschlagen, dass bei Umstellung der Behälterbehandlungseinrichtung auf einen neuen Behältertyp, die hierfür benötigten Formatteile mittels eines autonom verfahrbaren Transportsystems bereitgestellt werden, so dass ohne zusätzlichen Personaleinsatz eine besonders effektive Umrüstung bei geringer Stillstandzeit der Anlage ermöglicht wird.

Bei einem bevorzugten Verfahren entnimmt ein an der wenigstens einen Behälterbehandlungseinrichtung angeordneter Wechselroboter die auf einem Tragegestell angeordneten Formatteile und/oder Werkzeuge von dem Tragegestell und führt das Austauschen oder Auswechseln der Formatteile und/oder Werkzeuge durch. Es wird demnach weiterhin vorgeschlagen, dass nicht nur das Bereitstellen der Formatteile automatisch erfolgt, sondern im Wesentlichen der gesamte Wechselvorgang automatisch durchgeführt wird.

Weitere Vorteile und Ausführungsformen ergeben sich aus den beigefügten Zeichnungen:
Darin zeigen:
- Fig. 1: eine schematische Darstellung einer erfindungsgemäßen Vorrichtung zum Behandeln von Behältnissen;
- Fig. 2: eine schematische Darstellung einer ersten Ausführungsform eines fahrerlosen-Transportsystems;
- Fig. 3: eine schematische Darstellung einer zweiten Ausführungsform eines fahrerlosen-Transportsystems; und
- Fig. 4: eine schematische Darstellung einer weiteren Ausführungsform eines fahrerlosen-Transportsystems.

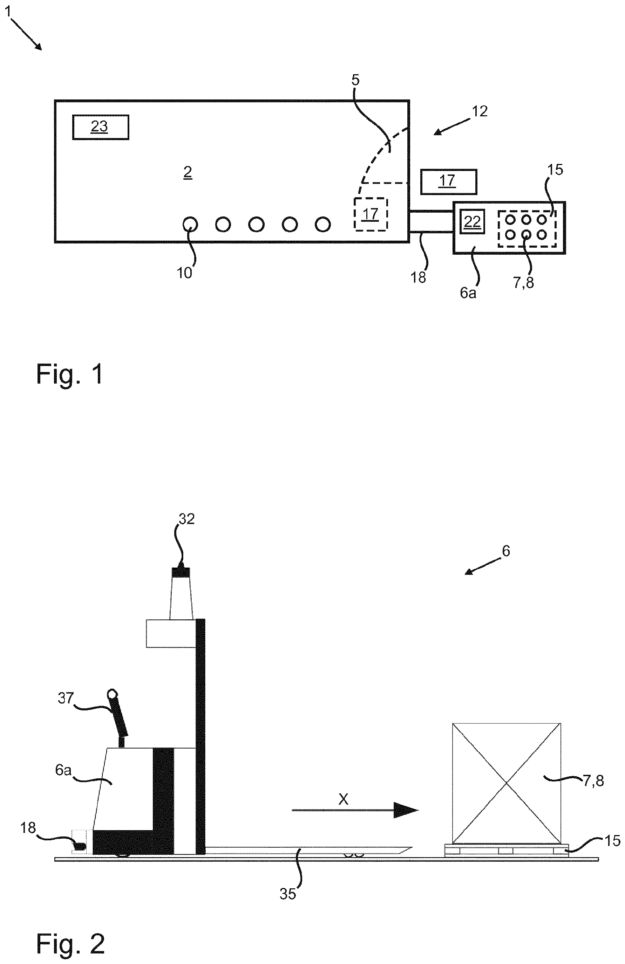

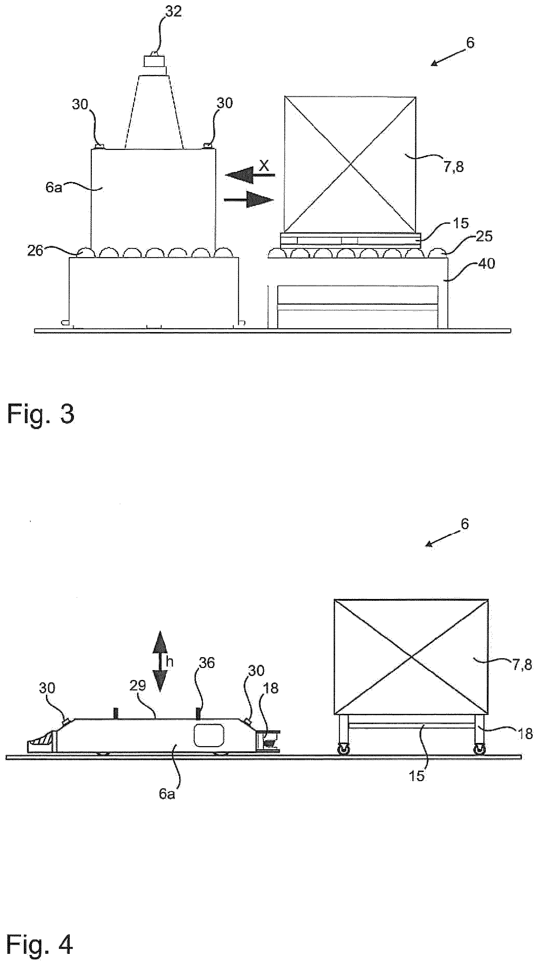

Figur 1 zeigt eine schematische Darstellung einer erfindungsgemäßen Vorrichtung 1 zum Behandeln von Behältnissen 10 mit einem fahrerlosen-Transportsystem 6a. Die Vorrichtung 1 weist dabei eine Behälterbehandlungseinrichtung 2 auf, wobei in dieser Ausführungsform das fahrerlose-Transportsystem 6a die Behälterbehandlungseinrichtung über eine Kontaktstelle 18 kontaktieren kann. Diese Kontaktstelle 18 ist dabei bevorzugt in der Nähe einer Arbeitsposition 12, an der der Wechselprozess stattfindet angeordnet. Entsprechend weist auch das fahrerlose-Transportsystem 6a, wie aus den Figuren 2 und 4 erkennbar ist, eine hierzu korrespondierende Kontaktstelle 18 auf. Das Bezugszeichen 5 kennzeichnet einen Rüstzugang der Behälterbehandlungseinrichtung 2.

Das fahrerlose-Transportsystem 6a hat dabei in dieser Darstellung ein Tragegestell 15 aufgenommen, welches durch die gestrichelten Linien angedeutet ist. An dem Tragegestell 15 sind dabei Formateile 7 und Werkzeuge 8 für die Umrüstung der Behälterbehandlungseinrichtung 2 angeordnet. Die Behälterbehandlungseinrichtung 2 weist dabei eine Steuerungseinrichtung 23 auf, welche bevorzugt mit einer Steuerungseinrichtung 22 des Tragegestells 15 gekoppelt ist.

Das Bezugszeichen 17 kennzeichnet einen Wechselroboter, welcher die Formatteile 7 und Werkzeuge 8 zum Umrüsten der Behälterbehandlungseinrichtung 2 greifen kann. Dabei wird durch den zweiten gestrichelt dargestellte Wechselroboter 17 verdeutlicht, dass es bevorzugt auch sein könnte, dass der Wechselroboter innerhalb der Behälterbehandlungseinrichtung 2 angeordnet ist.

Figur 2 zeigt eine schematische Darstellung einer ersten Ausführungsform eines fahrerlosen-Transportsystems 6a. Das fahrerlose-Transportsystem 6a ist dieser Ausführungsform als Hubwagen mit Gabeln 35 ausgebildet, welche in einer Bewegungsrichtung x unter das Traggestell 15 gefahren werden, um dieses aufzunehmen. Auf dem Tragegestell 15 sind schematisch die Formateile 7 und Werkezuge 8 angeordnet. Das Bezugszeichen 18 kennzeichnet dabei wiederum die Kontaktstelle über welche das fahrerlose-Transportsystem 6a mit der Behälterbehandlungseinrichtung 2 kontaktierbar ist. Bevorzugt könnte es allerdings auch sein, dass diese Kontaktstelle 18 an dem Tragegestell 15 angeordnet ist und entsprechend das Tragegestell mit der Behälterbehandlungseinrichtung kontaktierbar ist. Das fahrerlose-Transportsystem weist weiterhin eine Orientierungseinrichtung 32 auf, über welche das fahrerlose-Transportsystem 6a die Behälterbehandlungseinrichtung 2 und auch das Tragegestell 15 lokalisieren kann. Das Bezugszeichen 37 kennzeichnet einen Haltegriff, über welchen das fahrerlose-Transportsystem 6a bei Bedarf auch manuell verschoben werden kann.

Figur 3 zeigt eine schematische Darstellung einer zweiten Ausführungsform eines fahrerlosen-Transportsystems 6a. Dabei ist erkennbar, dass hier unterhalb des Tragegestells 15 ein weiteres Gestell 40 vorhanden ist, welches Tragrollen 25 aufweist, über welche das Tragegestell 15 in der Bewegungsrichtung x auf das fahrerlose-Transportsystem 6a geschoben werden kann. An dem fahrerlosen-Transportsystem 6a selbst sind dabei ebenfalls Tragrollen 26 angeordnet. Das Bezugszeichen 32 kennzeichnet wiederum die Ortserfassungseinrichtung. Weiterhin weist das fahrerlose-Transportsystem 6a in dieser Darstellung Sensoren 30 auf, so dass das fahrerlose-Transportsystem 6a Personen oder Gegenstände die sich in der Fahrbahn befinden erkennen kann.

Figur 4 zeigt eine schematische Darstellung einer weiteren Ausführungsform eines fahrerlosen-Transportsystems 6a. Das fahrerlose-Transportsystem 6a wird in dieser Darstellung unter das Tragegestell 15 gefahren und ist zur Aufnahme des Tragegestells 15 über eine Hubeinrichtung 29 in der Hubrichtung h bewegbar. Bevorzugt weist auch das Tragegestell 15 selbst eine derartige Hubeinrichtung 28 auf, so dass auch das Tragegestell 15 in der Hubrichtung h bewegbar ist. Das Bezugszeichen 36 kennzeichnet Aufnahmeelemente zum Aufnehmen und Halten des Tragegestells 15.

### Bezugszeichenliste

- 1: Vorrichtung
- 2: Behälterbehandlungseinrichtung
- 5: Rüstzugang
- 6: Transportsystem
- 6a: fahrerloses-Transportsystem
- 7: Formatteile
- 8: Werkzeuge
- 10: Behältnisse
- 12: Arbeitsposition
- 15: Tragegestell
- 17: Wechselroboter
- 18: Kontaktstelle
- 22: Steuerungseinrichtung des fahrerlosen-Transportsystems 6a
- 23: Steuerungseinrichtung der Behälterbehandlungseinrichtung 2
- 25: Tragrollen des Tragegestells 15
- 26: Tragrollen des fahrerlosen-Transportsystems 6a
- 28: Hubeinrichtung des Tragegestells 15
- 29: Hubeinrichtung des fahrerlosen-Transportsystems 6a
- 30: Sensoren
- 32: Ortserfassungseinrichtung
- 35: Gabel
- 36: Aufnahmeelemente
- 37: Haltegriff
- 40: Gestell

- h: Hubbewegung
- x: Bewegungsrichtung

## Patentansprüche

1. Vorrichtung (1) zum Behandeln von Behältnissen (10) und insbesondere Kunststoffbehältnissen, mit wenigstens einer Behälterbehandlungseinrichtung (2), welche wenigstens einen Rüstzugang (5) aufweist, an welchen in einem Rüstbetrieb Formatteile (7) und/oder Werkzeuge (8) auswechselbar sind und mit einem Transportsystem (6), mittels welchem die Formatteile (7) und/oder Werkzeuge (8) zu der wenigstens einen Behälterbehandlungseinrichtung (2) bringbar sind, wobei es sich bei dem Transportsystem (6) um ein fahrerloses-Transportsystem (6a) handelt, mittels welchem die Formatteile (7) und/oder Werkzeuge (8) automatisch zu wenigstens einer Behälterbehandlungseinrichtung (2) bringbar sind, **dadurch gekennzeichnet, dass** der wenigstens einen Behälterbehandlungseinrichtung (2) ein Wechselroboter (17) zum Auswechseln und/oder Austauschen der Formatteile (7) und/oder Werkzeuge (8) zugeordnet ist, wobei das fahrerlose-Transportsystem (6a) und der Wechselroboter (17) in Kommunikationsverbindung zueinander stehen und das fahrerlose-Transportsystem (6a) und der Wechselroboter (17) über eine Kontaktstelle (18) miteinander kontaktierbar sind.

2. Vorrichtung (1) nach Anspruch 1,
**dadurch gekennzeichnet, dass**
die Behälterbehandlungseinrichtung (2) aus einer Gruppe von Behandlungseinrichtungen ausgewählt ist, welche eine Erwärmungseinrichtung zum Erwärmen der Behältnisse, eine Umformungseinrichtung zum Umformen der Behältnisse, eine Etikettiereinrichtung zum Etikettieren der Behältnisse, eine Fülleinrichtung zum Füllen der Behältnisse, einen Verschließer zum Verschließen von Behältnissen, eine Verpackungseinrichtung zum Verpacken der Behältnisse, ein Transporteinrichtung zum Transportieren der Behältnisse, eine Sterilisationseinrichtung zum Sterilisieren der Behältnisse oder dergleichen enthält.

3. Vorrichtung (1) nach wenigstens einem der vorhergehenden Ansprüche,
**dadurch gekennzeichnet, dass**
die Formatteile (7) und/oder Werkzeuge (8) mittels des fahrerlosen-Transportsystems (6a) zu einer vorgegebenen Arbeitsposition (12) der Behälterbehandlungseinrichtung (2) bringbar sind, wobei es sich bei dieser Arbeitsposition (12) um den Rüstzugang (5) handelt.

4. Vorrichtung (1) nach wenigstens einem der vorhergehenden Ansprüche,
**dadurch gekennzeichnet, dass**
die Formatteile (7) und/oder Werkzeuge (8) auf einem Tragegestell (15) angeordnet sind, welches von dem fahrerlosen-Transportsystem (6a) aufnehmbar und/oder ablegbar ist.

5. Vorrichtung (1) nach wenigstens einem der vorhergehenden Ansprüche,
**dadurch gekennzeichnet, dass**
die Vorrichtung (1) eine Vielzahl von Behälterbehandlungseinrichtungen (2) aufweist und mittels des fahrerlosen-Transportsystems (6a) die Formatteile (7) und/oder Werkzeuge (8) zu der Vielzahl von Behälterbehandlungseinrichtungen (2) bringbar sind.

6. Vorrichtung (1) nach Anspruch 5,
**dadurch gekennzeichnet, dass**
das fahrerlose-Transportsystem (6a) zwischen einer Vielzahl von Behälterbehandlungseinrichtungen (2) frei verfahrbar ist oder auf einem Schienensystem verfahrbar ist.

7. Vorrichtung (1) nach wenigstens einem der vorhergehenden Ansprüche,
**dadurch gekennzeichnet, dass**
das Tragegestell (15) mindestens einen Sensor und/oder mindestens eine Fixierkante aufweist, um das Tragegestell (15) gegenüber dem Wechselroboter (17) zu positionieren.

8. Vorrichtung (1) nach wenigstens einem der vorhergehenden Ansprüche,
**dadurch gekennzeichnet, dass**
eine Steuerungseinrichtung (22) des fahrerlosen-Transportsystems (6a) mit einer Steuerungseinrichtung (23) der wenigstens einen Behälterbehandlungseinrichtung (2) gekoppelt ist.

9. Verfahren zum Behandeln von Behältnissen (10) und insbesondere Kunststoffbehältnissen, mit wenigstens einer Behälterbehandlungseinrichtung (2), welche wenigstens einen Rüstzugang (5) aufweist, an welchen in einem Rüstbetrieb Formatteile (7) und/oder Werkzeuge (8) ausgewechselt werden, wobei die für den Wechselvorgang benötigten Formatteile (7) und/oder Werkzeuge (8) mit einem Transportsystem (6) zu der wenigstens einen Behälterbehandlungseinrichtung (2) gebracht werden, wobei es sich bei dem Transportsystem (6) um ein fahrerloses-Transportsystem (6a) handelt, welches die Formatteile (7) und/oder Werkzeuge (8) automatisch zu wenigstens einer Behälterbehandlungseinrichtung (2) bringt, **dadurch gekennzeichnet, dass** der wenigstens einen Behälterbehandlungseinrichtung (2) ein Wechselroboter (17) zum Auswechseln und/oder Austauschen der Formatteile (7) und/oder Werkzeuge (8) zugeordnet ist, wobei das fahrerlose-Transportsystem (6a) und der Wechselroboter (17) in Kommunikationsverbindung zueinander stehen und das fahrerlose-Transportsystem (6a) und der Wechselroboter (17) über eine Kontaktstelle (18) miteinander kontaktierbar sind.

10. Verfahren nach Anspruch 9,
**dadurch gekennzeichnet, dass**
ein an der wenigstens einen Behälterbehandlungseinrichtung (2) angeordneter Wechselroboter (17) die auf einem Tragegestell (15) angeordneten Formatteile (7) und/oder Werkzeuge (8) von dem Tragegestell (15) entnimmt und das Austauschen oder Auswechseln der Formatteile (7) und/oder Werkzeuge (8) durchführt.

## Claims

1. Device (1) for processing containers (10), in particular plastic containers, comprising at least one container-processing apparatus (2), which has at least one changeover access entry (5), at which format parts (7) and/or tools (8) can be exchanged during changeover operation, and comprising a transport system (6), by means of which the format parts (7) and/or tools (8) can be brought to the at least one container-processing apparatus (2),
wherein the transport system (6) is a driverless transport system (6a), by means of which the format parts (7) and/or tools (8) can be automatically brought to at least one container-processing apparatus (2), **characterised in that**
at least one container-processing apparatus (2) is assigned to a changing robot (17) for replacing and/or exchanging the format parts (7) and/or tools (8), wherein the driverless transport system (6a) and the changing robot (17) are in communication connection to each other and the driverless transport system (6a) and the changing robot (17) are contactable via a contact point (18).

2. Device (1) according to claim 1,
**characterised in that**
the container-processing apparatus (2) is selected from a group of processing apparatus, which includes a heating device for heating the containers, a shaping device for shaping the containers, a labelling device for the labelling of the containers, a filling device for filling the containers, a closing device for closing the containers, a packaging device for packing the containers, a transport device for transporting the containers, a sterilization device for sterilising the containers or the like.

3. Device (1) according to at least one of the preceding claims, **characterised in that**
the format parts (7) and/or tools (8) are transferable by means of the driverless transport system (6a) to a predetermined working position (12) of the container-processing apparatus (2), wherein this working position (12) is the changeover access entry (5).

4. Device (1) according to at least one of the preceding claims, **characterised in that**
the format parts (7) and/or tools (8) are arranged on a carrying frame (15) which can be received and/or taken off by the driverless transport system (6a).

5. Device (1) according to at least one of the preceding claims, **characterised in that**
the device (1) has a variety of container-processing apparatus (2) and by means of the driverless transport system (6a) the format parts (7) and/or tools (8) are bringable to the variety of container-processing apparatus (2).

6. Device (1) according to claim 5,
**characterised in that**
the driverless transport system (6a) is freely movable between a variety of container-processing apparatus (2) or can be movable on a rail system.

7. Device (1) according to at least one of the preceding claims, **characterised in that**
the carrying frame (15) has at least one sensor and/or at least one fixing edge to position the carrying frame (15) with respect the changing robot (17).

8. Device (1) according to at least one of the preceding claims, **characterised in that**
a control system (22) of the driverless transport system (6a) is coupled with a control system (23) of the at least one container-processing apparatus (2).

9. Method for processing containers (10), in particular plastic containers, comprising at least one container-processing apparatus (2), which has at least one changeover access entry (5), at which format parts (7) and/or tools (8) will be exchanged during changeover operation, and comprising a transport system (6), by means of which the format parts (7) and/or tools (8) will be brought to the at least one container-processing apparatus (2),
wherein the transport system (6) is a driverless transport system (6a), by means of which the format parts (7) and/or tools (8) will be automatically brought to at least one container-processing apparatus (2), **characterised in that**
at least one container-processing apparatus (2) is assigned to a changing robot (17) for replacing and/or exchanging the format parts (7) and/or tools (8), wherein the driverless transport system (6a) and the changing robot (17) are in communication connection to each other and the driverless transport system (6a) and the changing robot (17) are contactable via a contact point (18).

10. Method according to claim 9,
**characterised in that**
a changing robot (17) arranged at the at least one container-processing apparatus (2) removes the format parts (7) and/or tools (8) arranged on a carrying frame (15) from the carrying frame (15) and carries out the replacement or exchange of the format parts (7) and/or tools (8).

## Revendications

1. Dispositif (1) destiné à traiter des contenants (10) et en particulier des contenants en plastique, avec au moins un équipement de traitement de contenants (2), lequel présente au moins un accès de préparation (5) au niveau duquel des pièces de format (7) et/ou des outils (8) peuvent être échangés dans une opération de préparation, et avec un système de transport (6) au moyen duquel les pièces de format (7) et/ou les outils (8) peuvent être amenés au au moins un équipement de traitement de contenants (2),
dans lequel le système de transport (6) est un système de transport sans conducteur (6a) au moyen duquel les pièces de format (7) et/ou les outils (8) peuvent être automatiquement amenés à au moins un équipement de traitement de contenants (2),
**caractérisé en ce que**
un robot échangeur (17) est attribué au au moins un équipement de traitement de contenants (2) pour échanger et/ou remplacer les pièces de format (7) et/ou les outils (8), dans lequel le système de transport sans conducteur (6a) et le robot échangeur (17) sont dans une liaison de communication l'un avec l'autre, et le système de transport sans conducteur (6a) et le robot échangeur (17) peuvent être mis en contact l'un avec l'autre via un point de contact (18).

2. Dispositif (1) selon la revendication 1,
**caractérisé en ce que**
l'équipement de traitement de contenants (2) est sélectionné dans un groupe d'équipements de traitement qui contient un équipement de réchauffement pour réchauffer les contenants, un équipement de façonnage pour façonner les contenants, un équipement d'étiquetage pour étiqueter les contenants, un équipement de remplissage pour remplir les contenants, une capsuleuse pour capsuler les contenants, un équipement d'emballage pour emballer les contenants, un équipement de transport pour transporter les contenants, un équipement de stérilisation pour stériliser les contenants, ou analogues.

3. Dispositif (1) selon au moins l'une des revendications précédentes, **caractérisé en ce que**
les pièces de format (7) et/ou les outils (8) peuvent être amenés au moyen du système de transport sans conducteur (6a) à une position de travail (12) prédéfinie de l'équipement de traitement de contenants (2), dans lequel cette position de travail (12) est l'accès de préparation (5).

4. Dispositif (1) selon au moins l'une des revendications précédentes, **caractérisé en ce que**
les pièces de format (7) et/ou les outils (8) sont agencés sur un châssis porteur (15), lequel peut être reçu et/ou déposé par le système de transport sans conducteur (6a).

5. Dispositif (1) selon au moins l'une des revendications précédentes, **caractérisé en ce que**
le dispositif (1) présente une pluralité d'équipements de traitement de contenants (2) et les pièces de format (7) et/ou les outils (8) peuvent être amenés au moyen du système de transport sans conducteur (6a) à la pluralité d'équipements de traitement de contenants (2).

6. Dispositif (1) selon la revendication 5,
**caractérisé en ce que**
le système de transport sans conducteur (6a) peut être librement déplacé entre une pluralité d'équipements de traitement de contenants (2) ou peut être déplacé sur un système de rails.

7. Dispositif (1) selon au moins l'une des revendications précédentes, **caractérisé en ce que**
le châssis porteur (15) présente au moins un capteur et/ou au moins un bord de fixation pour positionner le châssis porteur (15) par rapport au robot échangeur (17).

8. Dispositif (1) selon au moins l'une des revendications précédentes, **caractérisé en ce que**
un équipement de commande (22) du système de transport sans conducteur (6a) est couplé à un équipement de commande (23) du au moins un équipement de traitement de contenants (2).

9. Procédé destiné à traiter des contenants (10) et en particulier des contenants en plastique, avec au moins un équipement de traitement de contenants (2), lequel présente au moins un accès de préparation (5) au niveau duquel des pièces de format (7) et/ou des outils (8) peuvent être échangés dans une opération de préparation, dans lequel les pièces de format (7) et/ou les outils (8) nécessaires au processus d'échange sont amenés avec un système de transport (6) au au moins un équipement de traitement de contenants (2),
dans lequel le système de transport (6) est un système de transport sans conducteur (6a), lequel amène automatiquement les pièces de format (7) et/ou les outils (8) à au moins un équipement de traitement de contenants (2),
**caractérisé en ce que**
un robot échangeur (17) est attribué au au moins un équipement de traitement de contenants (2) pour échanger et/ou remplacer les pièces de format (7) et/ou les outils (8), dans lequel le système de transport sans conducteur (6a) et le robot échangeur (17) sont dans une liaison de communication l'un avec l'autre, et le système de transport sans conducteur (6a) et le robot échangeur (17) peuvent être mis en contact l'un avec l'autre via un point de contact (18).

10. Procédé selon la revendication 9,
**caractérisé en ce que**
un robot échangeur (17) agencé au niveau du au moins un équipement de traitement de contenants (2) prélève du châssis porteur (15) les pièces de format (7) et/ou les outils (8) agencés sur un châssis porteur (15) et réalise l'échange et/ou le remplacement des pièces de format (7) et/ou des outils (8).
